# EUROPÄISCHE PATENTANMELDUNG

(11) **EP 0 893 199 A2**
(43) Veröffentlichungstag der Anmeldung: **27.01.1999**
(21) Anmeldenummer: 98103077.8
(22) Anmeldetag: 21.02.1998
(51) Int. Cl.: B23Q 5/10

(54) **Stationäre Werkzeugmaschine, insbesondere Kreissägemaschine oder Fräsmaschine**

(30) Priorität: 23.07.1997 DE 29712892 U
(71) Anmelder: Elektra Beckum Aktiengesellschaft, D-49716 Meppen (DE)
(72) Erfinder: Rugen, Hermann, Dipl.-Ing., 49716 Meppen-Rühle (DE)
(74) Vertreter: Patentanwälte Gesthuysen, von Rohr, Weidener, Häckel

(57) **Zusammenfassung**

Stationäre Werkzeugmaschine, insbesondere Kreissägemaschine oder Fräsmaschine, mit einem Gehäuse (1), mit einem elektrischen Antriebsmotor in dem Gehäuse (1), insbesondere einem Kollektormotor (Universalmotor), zum Drehantrieb eines Bearbeitungswerkzeugs (2), insbesondere eines Kreissägeblattes oder eines Fräsers, und mit einer elektrischen bzw. elektronischen Steuerung des elektrischen Antriebsmotors, wobei mittels der Steuerung der elektrische Antriebsmotor in seiner Leerlaufdrehzahl steuerbar oder, vorzugsweise, regelbar ist.

## Beschreibung

Die Erfindung betrifft eine stationäre Werkzeugmaschine, insbesondere Kreissägemaschine oder Fräsmaschine, mit den Merkmalen des Oberbegriffs von Anspruch 1. Stationäre Werkzeugmaschine meint im vorliegenden Zusammenhang stationäre oder halbstationäre, also zwar im Prinzip stationäre, jedoch transportable Werkzeugmaschinen im Gegensatz zu Hand-Werkzeugmaschinen wie Handbohrmaschinen o. dgl.

Alle bislang bekannten stationären Werkzeugmaschinen sind als Steuerung des Antriebsmotors mit einem Ein/Aus-Schalter versehen. Die Drehzahl des elektrischen Antriebsmotors, die die Drehzahl des Werkzeugs bestimmt, ist mehr oder weniger fest vorgegeben, die Lastdrehzahl stellt sich materialabhängig selbst ein.

Der Erfindung liegt die Aufgabe zugrunde, eine stationäre Werkzeugmaschine der in Rede stehenden Art so auszugestalten und weiterzubilden, daß sie zur Bearbeitung unterschiedlichster Materialien optimal einsetzbar ist. Die zuvor aufgezeigte Aufgabe ist bei einer stationären Werkzeugmaschine mit den Merkmalen des Oberbegriffs von Anspruch 1 durch die Merkmale des kennzeichnenden Teils von Anspruch 1 gelöst. Besonders bevorzugt sind Ausgestaltungen der Ansprüche 2 und, insbesondere, 5.

Die Steuerung oder besser noch Regelung der Leerlaufdrehzahl, nach Anspruch 2 auch der Lastdrehzahl des elektrischen Antriebsmotors und damit des Werkzeugs macht es möglich, die Drehzahl in bestimmten Grenzen zu wählen und auf das jeweils bearbeitete Material abzustellen. Damit können die Drehzahl und die Schnittgeschwindigkeit den jeweils vorliegenden Anforderungen vom Benutzer angepaßt werden. Das ist ein erheblicher Vorteil gegenüber den bislang bekannten stationären Werkzeugmaschinen.

Besonders zweckmäßig ist es, wenn die eingestellte Drehzahl einfach kontrolliert werden kann. Dazu ist die vorzugsweise vorgesehene Drehzahlanzeige von Bedeutung.

Bevorzugte Ausgestaltungen und Weiterbildungen sind Gegenstand der weiteren Unteransprüche.

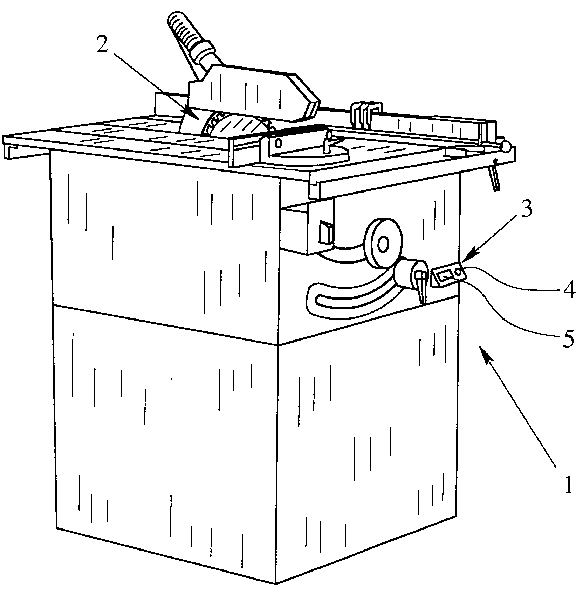

Das in der einzigen Figur dargestellte Ausführungsbeispiel zeigt schematisch als Beispiel einer stationären Werkzeugmaschine eine Tischkreissäge mit einem Gehäuse 1 und einem darin angeordneten, in der Fig. nicht erkennbaren elektrischen Antriebsmotor. Bei dem elektrischen Antriebsmotor handelt es sich insbesondere um einen in der Drehzahl regelbaren Kollektormotor (Universalmotor). Dieser dient zum Drehantrieb eines Werkzeugs 2, das im dargestellten Ausführungsbeispiel das Kreissägeblatt der Kreissägemaschine ist.

Die dargestellte Werkzeugmaschine weist eine elektrische bzw. elektronische Steuerung des Antriebsmotors auf, die mehr leistet als der schematisch angedeutete Ein/Ausschalter. Vorgesehen ist nämlich, daß mittels der Steuerung der elektrische Antriebsmotor in seiner Leerlaufdrehzahl steuerbar oder, vorzugsweise, regelbar ist. Die Vorteile dieser Konzeption sind weiter oben bereits erläutert worden.

Besonders vorteilhaft ist es, wenn der elektrische Antriebsmotor auch in seiner Lastdrehzahl steuerbar oder, vorzugsweise, regelbar ist. Eine Regelung auf den eingestellten Drehzahl-Sollwert ist vorzuziehen.

Das dargestellte Ausführungsbeispiel zeigt, daß die Steuerung mit einem auf einem Bedienfeld 3 des Gehäuses 1 angeordneten Drehzahleinsteller 4 versehen ist. Das dargestellte Ausführungsbeispiel zeigt dabei den Drehzahleinsteller 4 ausgeführt als Drehknopf und korrespondierend mit einem Drehpotentiometer. Alternative Gestaltungen sind denkbar. Beispielsweise kann auch ein elektronischer Drehzahleinsteller 4 in Form eines elektronischen Spannungsstellers (digital) realisiert sein.

Bei dem dargestellten und dafür bevorzugten Ausführungsbeispiel einer stationären Werkzeugmaschine kann aber die Drehzahl nicht nur eingestellt werden, sie kann auch von der Bedienungsperson kontrolliert werden. Dazu ist vorgesehen, daß die Steuerung mit einer auf einem Bedienfeld 3 des Gehäuses 1 angeordneten Drehzahlanzeige 5 versehen ist. Im dargestellten Ausführungsbeispiel ist eine Digitalanzeige, und zwar eine Leuchtdiodenanzeige vorgesehen. Auch LCD-Anzeigen sind für solche Zwecke ohne weiteres einsetzbar.

Im dargestellten Ausführungsbeispiel ist realisiert, daß die Drehzahlanzeige 5 den eingestellten Drehzahl-Sollwert anzeigt. Auf diesen Drehzahl-Sollwert führt die Steuerung die tatsächliche Drehzahl des Kreissägeblattes 2 immer wieder zurück. Es kann auch vorgesehen sein, daß zusätzlich zum Drehzahl-Sollwert der jeweilige Drehzahl-Istwert mit angezeigt wird.

Bei der dargestellten stationären Werkzeugmaschine in Form einer Kreissägemaschine ist vorgesehen, daß die Lastdrehzahl des Antriebsmotors auf den Drehzahl-Sollwert regelbar ist. Die Ermittlung der Lastdrehzahl, überhaupt der Drehzahl des Werkzeugs 2, kann direkt, beispielsweise optoelektronisch mittels einer Lichtschrankensensorik erfolgen. Auch eine Erfassung mittels anderer bekannter Drehgeber (induktiv, kapazitiv, magnetoresistiv etc., ggf. auch rein mechanisch) ist denkbar.

Man kann auch eine indirekte Erfassung der vorliegenden Drehzahl realisieren. Im dargestellten Ausführungsbeispiel ist eine indirekte Erfassung dadurch realisiert, daß zur Regelung der Lastdrehzahl des elektrischen Antriebsmotors die Stromaufnahme des elektrischen Antriebsmotors als Fühlgröße eines Reglers auswertbar ist.

Die Stromaufnahme des elektrischen Antriebsmotors wird im darstellten Ausführungsbeispiel lastabhängig geregelt, so daß gleichzeitig auch eine Überlastung des elektrischen Antriebsmotors ausgeschlossen wird. Das ist zusätzlich eine elegante und sichere Lösung des Überlastungsproblems für den elektrischen Antriebsmotor, der bislang eingesetzte thermische Schutzelemente zwar nicht überflüssig macht, aber für den extremen Notfall in ihrer Bedeutung relativiert.

## Patentansprüche

1. Stationäre Werkzeugmaschine, insbesondere Kreissägemaschine oder Fräsmaschine, mit einem Gehäuse (1), mit einem elektrischen Antriebsmotor in dem Gehäuse (1), insbesondere einem Kollektormotor (Universalmotor), zum Drehantrieb eines Bearbeitungswerkzeugs (2), insbesondere eines Kreissägeblattes oder eines Fräsers, und mit einer elektrischen bzw. elektronischen Steuerung des elektrischen Antriebsmotors,
**dadurch gekennzeichnet,**
daß mittels der Steuerung der elektrische Antriebsmotor in seiner Leerlaufdrehzahl steuerbar oder, vorzugsweise, regelbar ist.

2. Werkzeugmaschine nach Anspruch 1, dadurch gekennzeichnet, daß der elektrische Antriebsmotor auch in seiner Lastdrehzahl steuerbar oder, vorzugsweise, regelbar ist.

3. Werkzeugmaschine nach Anspruch 1 oder 2, dadurch gekennzeichnet, daß die Steuerung mit einem auf einem Bedienfeld (3) des Gehäuses (1) angeordneten Drehzahleinsteller (4) versehen ist.

4. Werkzeugmaschine nach Anspruch 3, dadurch gekennzeichnet, daß der Drehzahleinsteller (4) einen Drehzahl-Sollwert einstellt.

5. Werkzeugmaschine nach Anspruch 4, dadurch gekennzeichnet, daß der Drehzahleinsteller 4 als Potentiometer oder als elektronischer Spannungssteller ausgeführt ist.

6. Werkzeugmaschine nach einem der Ansprüche 1 bis 5, dadurch gekennzeichnet, daß die Steuerung mit einer auf einem Bedienfeld (3) des Gehäuses (1) angeordneten Drehzahlanzeige (5) versehen ist.

7. Werkzeugmaschine nach Anspruch 6, dadurch gekennzeichnet, daß die Drehzahlanzeige (5) als Digitalanzeige, vorzugsweise mit Leuchtdioden oder mit LCD ausgeführt ist.

8. Werkzeugmaschine nach Anspruch 6 oder 7, dadurch gekennzeichnet, daß die Drehzahlanzeige (5) den eingestellten Drehzahl-Sollwert anzeigt oder den eingestellten Drehzahl-Sollwert und den tatsächlichen Drehzahl-Istwert anzeigt.

9. Werkzeugmaschine nach einem der Ansprüche 1 bis 8, dadurch gekennzeichnet, daß die Lastdrehzahl des Antriebsmotors auf den Drehzahl-Sollwert regelbar ist.

10. Werkzeugmaschine nach Anspruch 9, dadurch gekennzeichnet, daß zur Regelung der Lastdrehzahl des elektrischen Antriebsmotors die Stromaufnahme des elektrischen Antriebsmotors als Fühlgröße eines Reglers auswertbar ist.
